# EUROPEAN PATENT SPECIFICATION

(11) **EP 3 700 095 B1**
(45) Date of publication and mention of the grant of the patent: **08.10.2025**
(21) Application number: 19158659.3
(22) Date of filing: 21.02.2019
(51) Int. Cl.: H04B 1/04, H02M 1/44, H02M 3/00, H02M 7/00, H02J 3/36, H04L 5/00, H04B 1/74

(54) **REDUCING INTERFERENCE OF A MALFUNCTIONING TRANSMITTER DEVICE**
REDUZIERUNG DER STÖRUNG EINER FEHLERHAFTEN SENDEVORRICHTUNG
RÉDUCTION DE L'INTERFÉRENCE D'UN DISPOSITIF ÉMETTEUR DÉFAILLANT

(43) Date of publication of application: 26.08.2020
(73) Proprietor: Hitachi Energy Ltd, 8050 Zürich (CH)
(72) Inventor: ZHIBO, Pang, 722 40 Västerås (SE); DAVIDSSON, Mikael, 723 56 Västerås (SE); LUVISOTTO, Michele, 723 34 Västerås (SE)
(74) Representative: AWA Sweden AB

(56) References cited:
- WO-A1-2018/113960
- JP-A- 2003 046 426
- JP-A- 2003 309 473
- US-A- 4 242 753
- US-A1- 2004 192 247

## Description

### TECHNICAL FIELD

The present disclosure relates to the field of RF transmissions and in particular to a transmitter device which is configured to stop transmissions when RF signals longer than a threshold duration are detected and a method for reducing interference of a malfunctioning transmitter device.

### BACKGROUND

In traditional high-voltage power electronics systems such as switchgear, HVDC (High Voltage Direct Current), and/or FACTS (Flexible Alternating Current Transmission Systems), etc., the switching of power electronics modules is controlled through wired links, for example optical fibres. Due to the complexity of such systems and the high number of power electronics modules involved, several thousands of cables are deployed, with a strong impact in structural design, installation and commissioning costs. Moreover, optical fibres being subject to high difference potentials, as it is the case in high-voltage systems, increases risk of flammability. Finally, optical transmitters have a much shorter life cycle than power electronics components, with failure rates that can be up to 20 times higher.

One way to reduce these problems would be to migrate from wired to wireless communication of control signals. However, the environment of a high-voltage power electronics system is not ideal for wireless communication. There are enclosures creating reflections and affecting attenuation. The presence of metal objects causes further signal propagation issues and the switching and high voltage electronic components can cause interference. Field tests have confirmed that the radio propagation environment inside valve halls is much worse than outside due to strong reflections and shading of the radio signals caused by the crowded metallic elements in the valve hall.

Additionally, the communication of control signals in this application is of utmost importance and any failed communication may cause great disruption of the supply of power.

JP 2003 046426 A discusses a wireless device that is arranged to face one base station together with a plurality of other wireless devices and that performs one-to-many wireless communication with the base station. This document further discusses a configuration of a control function for preventing abnormal transmission continuation.

US 4 242 753 A discusses a radio transmitter time out timer.

JP 2003 309473 A discusses using component temperature as a proxy for monitoring the activity of a radio transmitter.

US 2004/192247 Al discusses an RC power control system including a watchdog circuit.

WO 2018/113960 A1 discusses communications networks for communication between a power electronics element and a control unit.

### SUMMARY

One objective is to reduce the risk of a malfunctioning transmitter device blocking out or severely interfering with transmissions from other transmitter devices.

According to a first aspect, it is provided a transmitter device according to claim 1.

The transmitter device may further comprise an RF amplifier and wherein the watchdog unit is configured to stop transmissions when there are RF signals detected on the antenna line for longer than the threshold duration by disconnecting power to the RF amplifier.

The watchdog unit may further be configured to reset a transmitter controller of the transmitter device when there are RF signals detected on the antenna line for longer than the threshold duration.

The coupler, the RF detector and the watchdog unit are all distinct from the transmitter controller.

The watchdog unit may be configured to connect power to the RF amplifier again after a wait duration.

The watchdog unit may be configured to completely power off the RF amplifier when RF signals detected on the antenna line for longer than a threshold duration occurs more than a threshold number of times.

The coupler may be configured to decouple a portion of the signal on the antenna line using a capacitive effect.

According to a second aspect, it is provided a communication device comprising the transmitter device according to the first aspect.

According to a third aspect, it is provided a method according to claim 8.

The step of stopping transmissions may comprise disconnecting power to an RF amplifier of the transmitter device.

The method may further comprise the step of: resetting a transmitter controller of the transmitter device when there are RF signals detected on the antenna line for longer than the threshold duration.

The method may further comprise the step of: connecting power to the RF amplifier again after a wait duration.

The method may further comprise the step of: completely powering off the RF amplifier when RF signals detected on the antenna line for longer than a threshold duration occurs more than a threshold number of times.

The step of decoupling may comprises decoupling the portion of the signal on the antenna line using a capacitive effect.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig. 1 shows a schematic drawing illustrating an environment in which embodiments presented herein can be applied;
Fig. 2 is a schematic drawing illustrating some components of a transmitter device of Fig. 1;
Fig. 3 is a schematic graph illustrating operation of the transmitter device of Fig. 2; and
Fig. 4 is a flow chart illustrating a method for reducing interference of a malfunctioning transmitter device.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

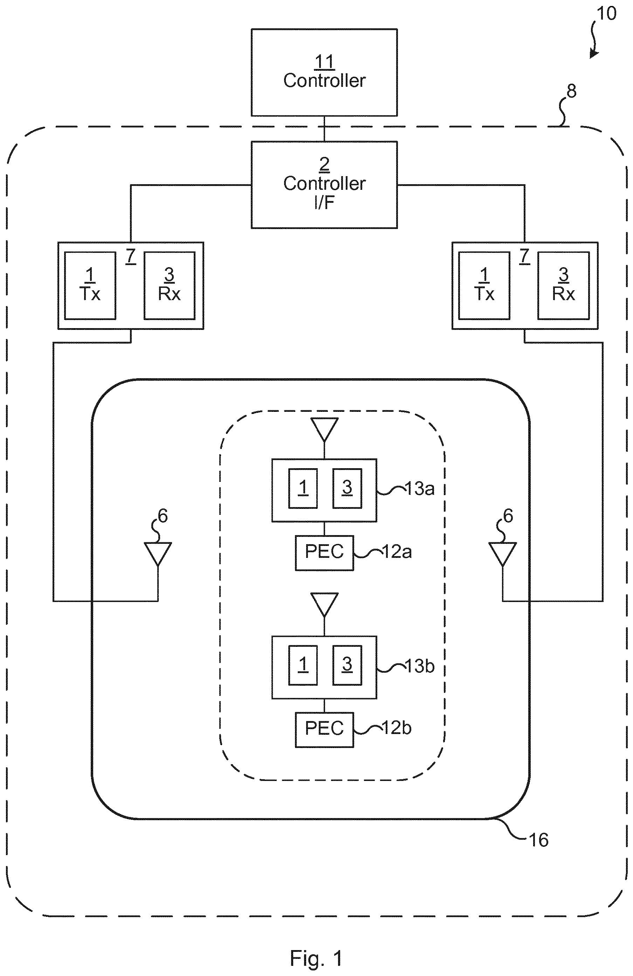

Fig. 1 shows a schematic drawing illustrating an environment being a high-voltage power electronics system 10 in which embodiments presented herein can be applied. The high-voltage power electronics system can e.g. be in the form of switchgear, HVDC, and/or FACTS, etc.

A power equipment controller 11 needs to communicate with one or more power equipment devices 12a-b. The power equipment devices 12a-b can e.g. be switches, local controllers, measurement equipment, etc. Each one of the power equipment devices 12a-b communicate using a respective equipment communication device 13a-b and a corresponding antenna. The power equipment devices 12a-b are provided inside an enclosure 16. The enclosure 16 can comprise walls, roof and floor and can thus be provided in the form of a building.

A controller communication device 8 is provided for communicating between the power equipment controller 11 and the power equipment devices 12a-b. The controller communication device 8 comprises components indicated in Fig. 1 inside the dashed lines, except the enclosure 16 which does not form part of the controller communication device 8.

The controller communication device 8 comprises a controller interface 2 for communicating with the power equipment controller 11. The controller interface 2 can e.g. be an optical interface, a conductive interface or a wireless interface. The controller interface can e.g. be based on any suitable Ethernet or IEEE 802.11.x standard, upon which e.g. Internet Protocol (IP) can be used.

At least one transmitter device 1 is provided as part of the controller communication device 8. Each transmitter device 1 comprises circuitry for processing RF transmission signals (based on signals provided from the power equipment controller 11) to be transmitted on the antenna(s) 6.

At least one receiver device 3 is also provided. Each receiver device 3 comprises circuitry for processing received RF signals (resulting in received data being provided to the power equipment controller 11). A transmitter device 1 and a receiver device 3 can be combined in one physical device, e.g. a transceiver.

In Fig. 1, the controller communication device 8 is illustrated with two transmitter devices and two receiver devices, respectively combined in two transceivers 7. However, there can be any number of transceivers, transmitter devices and receiver devices, including one, three or more.

Analogously, the equipment communication device 13a-b each comprises a transmitter 1 and a receiver 3.

The RF signals from the transmitter devices 1 are transmitted using antennas 6. The antennas thus transmit wireless signals to at least one power equipment device 12a-b or the controller communication device 8, respectively. In the quite difficult RF environment of the high-voltage power electronics system 10, the power equipment devices 12a-b can receive the RF signal from any one of the antennas 6. In this way, reliability of communication is greatly improved. The antennas 6 can also be used to receive RF signals from the equipment communication device 13a-b.

When there are several transmitter devices 1, if one of the transmitter devices were to malfunction and transmit signals excessively, this can block out or severely interfere with signals from other transmitter devices. According to embodiments presented herein, such malfunction is detected and transmissions of the malfunctioning transmitter device are stopped.

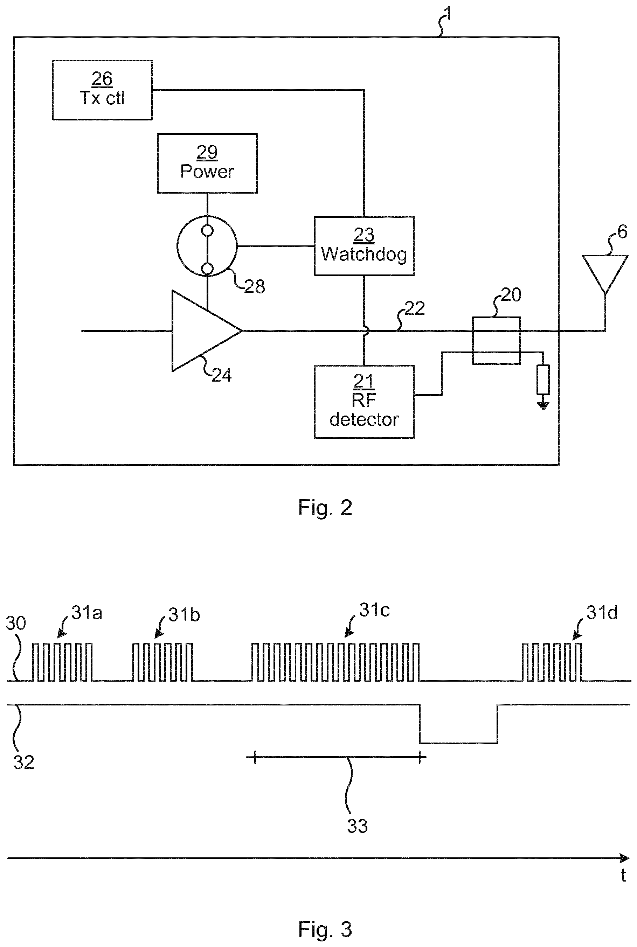

Fig. 2 is a schematic drawing illustrating some components of a transmitter device 1 forming part of the controller communication device 8 or any one of the equipment communication devices 13a-b of Fig. 1.

A coupler 20 is provided to decouple a portion of the signal on an antenna line 22. The decoupling by the coupler 20 can e.g. be achieved using capacitive effect. The output of the coupler corresponds to the signal on the antenna line 22, only with much less amplitude. The antenna line 22 carries the output of an RF amplifier 24 to be transmitted by a connected antenna 6. The RF amplifier 24 is powered by a power supply 29 and amplifies an RF signal to a suitable level for transmission using the antenna 6. The RF amplifier 24 is also known as a power amplifier. It is to be noted that, although not shown, the power supply 29 can power other components of the transmitter device 1.

An RF detector 21 is connected to the coupler 20 to thereby detect presence of RF signals on the antenna line 22. In other words, the input of the RF detector 21 is connected to the output of the coupler 20. The RF detector 21 is known per se and is implemented using hardware circuitry tuned to a suitable range of frequencies. The output of the RF detector switches from low to high (or vice versa) when an RF signal is detected on its input and switches from high to low (or vice versa) when the RF signal is no longer detected on its input.

A watchdog unit 23 is connected to the RF detector 21, such that the output of the RF detector 21 is connected to the input of the watchdog unit 23. The watchdog unit 23 is configured to stop transmissions when there are RF signals detected on the antenna line 22 that last for longer than a threshold duration. For instance, the transmissions can be stopped by disconnecting power to the RF amplifier 24, by opening a switch 28 between the power supply 29 and the RF amplifier 24.

Additionally, the watchdog unit 23 can be configured to reset a transmitter controller 26 of the transmitter device 1 when there are RF signals detected on the antenna line 22 for longer than the threshold duration. The transmitter controller 26 is a control unit controlling the overall operation of the transmitter device 1. The transmitter controller 26 can be implemented e.g. using a CPU (Central Processing Unit), MCU (Microcontroller Unit), DSP (Digital Signal Processor), ASIC (Application Specific Integrated Circuit), or FPGA (Field Programmable Gate Array).

The coupler 20, the RF detector 21 and the watchdog unit 23 are all distinct from the transmitter controller 26, whereby a reliable transmission shutoff is implemented which does not require proper function of the transmitter controller 26, since it can very well be the transmitter controller 26 causing excessive transmissions of a malfunctioning transmitter device 1. Hence, this solution is more reliable than a software based watchdog since the embodiments presented herein do not rely on the transmission controller (e.g. a CPU) to function properly.

Optionally, the watchdog unit 23 is configured to connect power to the RF amplifier 24 again after a wait duration, by closing the switch 28.

Optionally, the watchdog unit 23 is configured to completely power off the RF amplifier 24 when the excessive transmission duration occurs more than a threshold number of times, i.e. when RF signals detected on the antenna line 22 for longer than a threshold duration occurs more than a threshold number of times.

It is to be noted that the transmitter device 1 comprises additional components which are not shown here as they are not needed to explain the function of embodiments presented herein.

Fig. 3 is a schematic graph illustrating operation of the transmitter device 1 of Fig. 2. In the graph, time flows from left to right. At the top of the graph, an RF signal 30 is shown. The RF signal 30 is the signal between the RF amplifier 24 and the antenna 6 shown in Fig. 2, to be transmitted by the antenna 6. The RF signal 30 in this example contains a first transmission period 31a, a second transmission period 31b, a third transmission period 31c and a fourth transmission period 31d.

Below the RF signal 30, a watchdog signal 32 is shown. The watchdog signal 32 is the signal from the watchdog unit 23 to the switch 28 of Fig. 2.

In the RF signal 30, the first and second transmission periods 31a, 31b are both normal in duration. However, the third transmission period 31c is prolonged, indicating that the transmitter device is malfunctioning. When the duration of the RF signal in the third transmission period exceeds a threshold duration 33, the watchdog unit causes the watchdog signal 32 to change, which opens the switch, causing the RF amplifier to become unpowered, effectively stopping transmission of any more RF signal.

The length of the threshold duration 33 can be set based on expected duration of normal transmission periods. For instance, if normal transmission periods are less than 10 microseconds, the threshold duration 33 can be set to 15 microseconds.

After a certain period of time, the transmission device resumes operation, optionally also after a reset of the transmitter controller. Once operation is resumed, a fourth transmission period 31d occurs, which is a normal transmission period. It is to be noted that while the watchdog signal 32 is here shown to go low to open the switch, the reverse is equally possible, i.e. that the watchdog signal 32 goes high to open the switch.

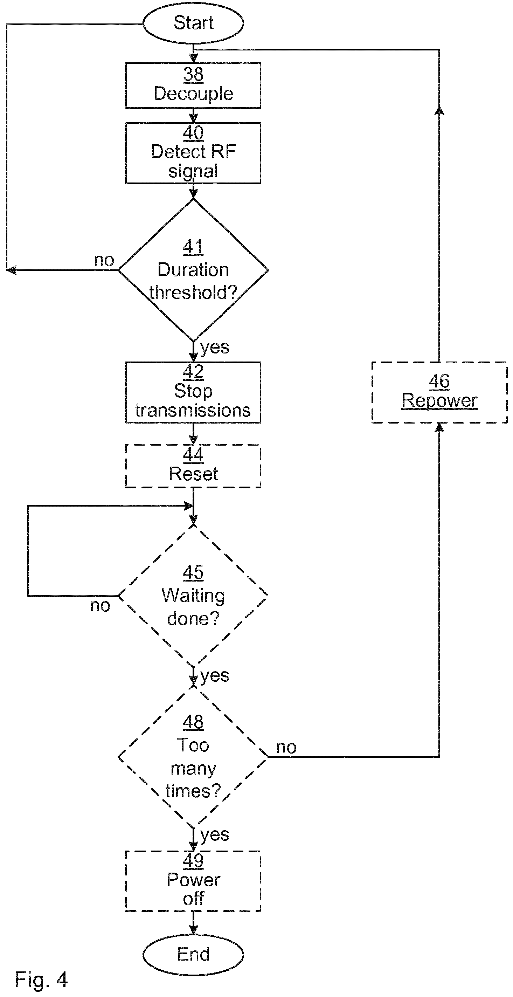

Fig. 4 is a flow chart illustrating a method for reducing interference of a malfunctioning transmitter device. The method is performed in the transmitter device. As mentioned above, the transmitter device comprises a coupler provided by an antenna line, an RF detector and a watchdog unit.

In a *decouple* step 38, the coupler decouples a portion of the signal on the antenna line. This can e.g. be achieved using capacitive effect.

In a *detect RF signal* step 40, the RF detector connected to the coupler detects presence of RF signals on the antenna line.

In a conditional duration *> threshold* step 41, the transmission device determines when there are RF signals detected on the antenna line for longer than a threshold duration. If this is not the case, the method returns to the *decouple* step 40. Otherwise, the method proceeds to a *stop transmissions* step 42.

In the *stop transmissions* step 42, the watchdog unit stops transmissions, e.g. by disconnecting power to an RF amplifier of the transmitter device.

In an optional *reset* step 44, the transmission device resets a transmitter controller of the transmitter device.

In an optional conditional *waiting done* step 45, the transmission device determines whether a predetermined wait duration has passed. If this is the case, the method proceeds to an optional conditional *too many times* step 48, or an optional *repower* step 46, if step 48 is not performed.

In the optional *repower* step 46, the transmission device connects power to the RF amplifier again.

In the optional conditional *too many times* step 48, the transmission device determines when RF signals detected on the antenna line for longer than a threshold duration has occurred more than a threshold number of times. If this is the case, the method proceeds to an optional power off step 49, Otherwise, the method proceeds to the optional repower step 46.

In the optional *power off* step 49, the transmission device completely powers off the RF amplifier to prevent the malfunction from interfering more.

Using embodiments presented herein, other transmissions in the vicinity of the transmitter device are not jammed when a malfunction occurs. This allows other transmitters to proceed with communication without or with minimal interference from the malfunctioning transmitter.

The aspects of the present disclosure have mainly been described above with reference to a few embodiments. The various aspects and embodiments disclosed herein are for purposes of illustration and are not intended to be limiting. The present invention is defined by the appended claims.

## Claims

1. A transmitter device (1) associated with a power equipment controller (11) or with a power equipment device (12) comprising:
a transmitter controller (26) configured to control the overall operation of the transmitter device (1);
a coupler (20) configured to decouple a portion of a signal on an antenna line (22);
a radio frequency, RF, detector (21) connected to the coupler (20) and configured to detect presence of RF signals on the antenna line (22); and
a watchdog unit (23) connected to the RF detector (21), the watchdog unit (23) being configured to stop transmissions when there are RF signals detected on the antenna line (22) for longer than a threshold duration;
wherein the coupler (20), the RF detector (21) and the watchdog unit (23) are all distinct from the transmitter controller (26).

2. The transmitter device (1) according to claim 1, further comprising an RF amplifier (24), and wherein the watchdog unit (23) is configured to stop transmissions when there are RF signals detected on the antenna line (22) for longer than the threshold duration by disconnecting power to the RF amplifier (24).

3. The transmitter device (1) according to claim 1 or 2, wherein the watchdog unit (23) is further configured to reset a transmitter controller (26) of the transmitter device (1) when there are RF signals detected on the antenna line (22) for longer than the threshold duration.

4. The transmitter device (1) according to claim 3 when dependent on claim 2, wherein the watchdog unit (23) is configured to connect power to the RF amplifier (24) again after a wait duration.

5. The transmitter device (1) according to claim 4, wherein the watchdog unit (23) is configured to completely power off the RF amplifier (24) when RF signals detected on the antenna line (22) for longer than a threshold duration occurs more than a threshold number of times.

6. The transmitter device (1) according to any one of the preceding claims, wherein the coupler (20) is configured to decouple a portion of the signal on the antenna line (22) using a capacitive effect.

7. A communication device (8) comprising the transmitter device (1) according to any one of the preceding claims.

8. A method for reducing interference of a malfunctioning transmitter device (1) associated with a power equipment controller (11) or with a power equipment device (12), the method being performed in the transmitter device (1), comprising a transmitter controller (26) configured to control the overall operation of the transmitter device (1), a coupler (20) provided by an antenna line (22), a radio frequency, RF, detector (21) and a watchdog unit (23), wherein the coupler (20), the RF detector (21) and the watchdog unit (23) are all distinct from the transmitter controller (26), the method comprising the steps of:
decoupling (38), by the coupler, a portion of a signal on the antenna line (22);
detecting (40) presence of RF signals on the antenna line, by the RF detector connected to the coupler; and
stopping (42) transmissions, by the watchdog unit (23), when there are RF signals detected on the antenna line (22) for longer than a threshold duration.

9. The method according to claim 8, wherein the step of stopping (42) transmissions comprises disconnecting power to an RF amplifier (24) of the transmitter device.

10. The method according to claim 8 or 9, further comprising the step of:
resetting (44) a transmitter controller (26) of the transmitter device (1) when there are RF signals detected on the antenna line (22) for longer than the threshold duration.

11. The method according to claim 9, further comprising the step of:
connecting (46) power to the RF amplifier (24) again after a wait duration.

12. The method according to claim 11, further comprising the step of:
completely powering off (49) the RF amplifier (24) when RF signals detected on the antenna line (22) for longer than a threshold duration occurs more than a threshold number of times.

13. The method according to any one of claims 8 to 12, wherein the step of decoupling (38) comprises decoupling the portion of the signal on the antenna line (22) using a capacitive effect.

## Patentansprüche

1. Sendervorrichtung (1), die mit einer Leistungsgerätesteuerung (11) oder mit einer Leistungsgerätevorrichtung (12) assoziiert ist und Folgendes umfasst:
eine Sendersteuerung (26), die dazu ausgelegt ist, den Gesamtbetrieb der Sendervorrichtung (1) zu steuern;
einen Koppler (20), der dazu ausgelegt ist, einen Teil eines Signals auf einer Antennenleitung (22) zu entkoppeln;
einen Hochfrequenzdetektor, HF-Detektor, (21), der mit dem Koppler (20) verbunden und dazu ausgelegt ist, das Vorhandensein von HF-Signalen auf der Antennenleitung (22) zu detektieren; und
eine Watchdog-Einheit (23), die mit dem HF-Detektor (21) verbunden ist, wobei die Watchdog-Einheit (23) dazu ausgelegt ist, Übertragungen zu stoppen, wenn HF-Signale auf der Antennenleitung (22) für länger als eine Schwellendauer detektiert werden;
wobei der Koppler (20), der HF-Detektor (21) und die Watchdog-Einheit (23) alle von der Sendersteuerung (26) getrennt sind.

2. Sendervorrichtung (1) nach Anspruch 1, ferner umfassend einen HF-Verstärker (24) und wobei die Watchdog-Einheit (23) dazu ausgelegt ist, Übertragungen zu stoppen, wenn HF-Signale auf der Antennenleitung (22) für länger als die Schwellendauer detektiert werden, indem Leistung zu dem HF-Verstärker (24) getrennt wird.

3. Sendervorrichtung (1) nach Anspruch 1 oder 2, wobei die Watchdog-Einheit (23) ferner dazu ausgelegt ist, eine Sendersteuerung (26) der Sendervorrichtung (1) zurückzusetzen, wenn HF-Signale auf der Antennenleitung (22) für länger als die Schwellendauer detektiert werden.

4. Sendervorrichtung (1) nach Anspruch 3, wenn abhängig von Anspruch 2, wobei die Watchdog-Einheit (23) dazu ausgelegt ist, nach einer Wartezeit Leistung zu dem HF-Verstärker (24) wieder anzuschließen.

5. Sendervorrichtung (1) nach Anspruch 4, wobei die Watchdog-Einheit (23) dazu ausgelegt ist, den HF-Verstärker (24) vollständig auszuschalten, wenn HF-Signale, die auf der Antennenleitung (22) für länger als eine Schwellendauer detektiert werden, mehr als eine Schwellenanzahl von Malen auftreten.

6. Sendervorrichtung (1) nach einem der vorhergehenden Ansprüche, wobei der Koppler (20) dazu ausgelegt ist, einen Teil des Signals auf der Antennenleitung (22) unter Verwendung eines kapazitiven Effekts zu entkoppeln.

7. Kommunikationsvorrichtung (8), die die Sendervorrichtung (1) nach einem der vorhergehenden Ansprüche umfasst.

8. Verfahren zum Reduzieren von Störung einer fehlerhaften Sendervorrichtung (1), die mit einer Leistungsgerätesteuerung (11) oder mit einer Leistungsgerätevorrichtung (12) assoziiert ist, wobei das Verfahren in der Sendervorrichtung (1) durchgeführt wird, die eine Sendersteuerung (26), die dazu ausgelegt ist, den Gesamtbetrieb der Sendervorrichtung (1) zu steuern, einen Koppler (20), der durch eine Antennenleitung (22) bereitgestellt wird, einen Hochfrequenzdetektor, HF-Detektor, (21) und eine Watchdog-Einheit (23) umfasst, wobei der Koppler (20), der HF-Detektor (21) und die Watchdog-Einheit (23) alle von der Sendersteuerung (26) getrennt sind, wobei das Verfahren die folgenden Schritte umfasst:
Entkoppeln (38) eines Teils eines Signals auf der Antennenleitung (22) durch den Koppler;
Detektieren (40) des Vorhandenseins von HF-Signalen auf der Antennenleitung durch den HF-Detektor, der mit dem Koppler verbunden ist; und
Stoppen (42) von Übertragungen durch die Watchdog-Einheit (23), wenn HF-Signale auf der Antennenleitung (22) für länger als eine Schwellendauer detektiert werden.

9. Verfahren nach Anspruch 8, wobei der Schritt des Stoppens (42) von Übertragungen Trennen von Leistung zu einem HF-Verstärker (24) der Sendervorrichtung umfasst.

10. Verfahren nach Anspruch 8 oder 9, das ferner den folgenden Schritt umfasst:
Zurücksetzen (44) einer Sendersteuerung (26) der Sendervorrichtung (1), wenn HF-Signale auf der Antennenleitung (22) für länger als die Schwellendauer detektiert werden.

11. Verfahren nach Anspruch 9, das ferner den folgenden Schritt umfasst:
erneutes Anschließen (46) der Leistung zu dem HF-Verstärker (24) nach einer Wartezeit.

12. Verfahren nach Anspruch 11, das ferner den folgenden Schritt umfasst:
vollständiges Ausschalten (49) des HF-Verstärkers (24), wenn HF-Signale, die auf der Antennenleitung (22) für länger als eine Schwellendauer detektiert werden, mehr als eine Schwellenanzahl von Malen auftreten.

13. Verfahren nach einem der Ansprüche 8 bis 12, wobei der Schritt des Entkoppelns (38) Entkoppeln des Teils des Signals auf der Antennenleitung (22) unter Verwendung eines kapazitiven Effekts umfasst.

## Revendications

1. Dispositif transmetteur (1) associé à une unité de commande d'équipement d'énergie électrique (11) ou à un dispositif d'équipement d'énergie électrique (12) comprenant :
une unité de commande de transmetteur (26) configuré pour commander le fonctionnement général du dispositif transmetteur (1) ;
un coupleur (20) configuré pour découpler une partie d'un signal sur une ligne d'antenne (22) ;
un détecteur de radiofréquence, RF, (21) connecté au coupleur (20) et configuré pour détecter une présence de signaux RF sur la ligne d'antenne (22) ; et
une unité de surveillance (23) connectée au détecteur RF (21), l'unité de surveillance (23) étant configurée pour arrêter des transmissions lorsqu'il y a des signaux RF détectés sur la ligne d'antenne (22) pendant plus longtemps qu'une durée seuil ;
dans lequel le coupleur (20), le détecteur RF (21), et l'unité de surveillance (23) sont tous distincts de l'unité de commande de transmetteur (26).

2. Dispositif transmetteur (1) selon la revendication 1, comprenant en outre un amplificateur RF (24), et dans lequel l'unité de surveillance (23) est configurée pour arrêter des transmissions lorsqu'il y a des signaux RF détectés sur la ligne d'antenne (22) pendant plus longtemps que la durée seuil en déconnectant l'énergie électrique à l'amplificateur RF (24).

3. Dispositif transmetteur (1) selon la revendication 1 ou 2, dans lequel l'unité de surveillance (23) est en outre configurée pour remettre à l'état initial une unité de commande de transmetteur (26) du dispositif transmetteur (1) lorsqu'il y a des signaux RF détectés sur la ligne d'antenne (22) pendant plus longtemps que la durée seuil.

4. Dispositif transmetteur (1) selon la revendication 3 lorsqu'elle dépend de la revendication 2, dans lequel l'unité de surveillance (23) est configurée pour reconnecter l'énergie électrique à l'amplificateur RF (24) après une durée d'attente.

5. Dispositif transmetteur (1) selon la revendication 4, dans lequel l'unité de surveillance (23) est configurée pour mettre complètement hors tension l'amplificateur RF (24) lorsque des signaux RF détectés sur la ligne d'antenne (22) pendant plus longtemps qu'une durée seuil se produit plus qu'un nombre seuil de fois.

6. Dispositif transmetteur (1) selon l'une quelconque des revendications précédentes, dans lequel le coupleur (20) est configuré pour découpler une partie du signal sur la ligne d'antenne (22) en utilisant un effet capacitif.

7. Dispositif de communication (8) comprenant le dispositif transmetteur (1) selon l'une quelconque des revendications précédentes.

8. Procédé pour réduire un brouillage d'un dispositif transmetteur défaillant (1) associé à une unité de commande d'équipement d'énergie électrique (11) ou à un dispositif d'équipement d'énergie électrique (12), le procédé étant réalisé dans le dispositif transmetteur (1), comprenant une unité de commande de transmetteur (26) configurée pour commander le fonctionnement général du dispositif transmetteur (1), un coupleur (20) fourni par une ligne d'antenne (22), un détecteur de radiofréquence, RF, (21), et une unité de surveillance (23), dans lequel le coupleur (20), le détecteur RF (21), et l'unité de surveillance (23) sont tous distincts de l'unité de commande de transmetteur (26), le procédé comprenant les étapes de :
le découplage (38), par le coupleur, d'une partie d'un signal sur la ligne d'antenne (22) ;
la détection (40) de la présence de signaux RF sur la ligne d'antenne, par le détecteur RF connecté au coupleur ; et
l'arrêt (42) de transmissions, par l'unité de surveillance (23), lorsqu'il y a des signaux RF détectés sur la ligne d'antenne (22) pendant plus longtemps qu'une durée seuil.

9. Procédé selon la revendication 8, dans lequel l'étape de l'arrêt (42) de transmissions comprend la déconnexion d'énergie électrique à un amplificateur RF (24) du dispositif transmetteur.

10. Procédé selon la revendication 8 ou 9, comprenant en outre l'étape de :
la remise à l'état initial (44) d'une unité de commande de transmetteur (26) du dispositif transmetteur (1) lorsqu'il y a des signaux RF détectés sur la ligne d'antenne (22) pendant plus longtemps que la durée seuil.

11. Procédé selon la revendication 9, comprenant en outre l'étape de :
la reconnexion (46) d'énergie électrique à l'amplificateur RF (24) après une durée d'attente.

12. Procédé selon la revendication 11, comprenant en outre l'étape de :
la mise hors tension complète (49) de l'amplificateur RF (24) lorsque des signaux RF détectés sur la ligne d'antenne (22) pendant plus longtemps qu'une durée seuil se produit plus qu'un nombre seuil de fois.

13. Procédé selon l'une quelconque des revendications 8 à 12, dans lequel l'étape du découplage (38) comprend le découplage de la partie du signal sur la ligne d'antenne (22) en utilisant un effet capacitif.
